# EUROPEAN PATENT APPLICATION

(11) **EP 4 016 702 A1**
(43) Date of publication of application: **22.06.2022**
(21) Application number: 21783942.2
(22) Date of filing: 24.03.2021
(51) Int. Cl.: H01M 10/6551, H01M 10/6556, H01M 10/613, H01M 50/20

(54) **BATTERY MODULE AND BATTERY PACK INCLUDING SAME**

(30) Priority: 09.04.2020 KR 20200043243
(71) Applicant: LG ENERGY SOLUTION, LTD., Seoul 07335 (KR)
(72) Inventor: KIM, Min Seop, Daejeon 34122 (KR); SEONG, Junyeob, Daejeon 34122 (KR); JANG, Sunghwan, Daejeon 34122 (KR)
(74) Representative: Plasseraud IP
(86) International application number: PCT/KR2021/003664
(87) International publication number: WO 2021/206325

(57) **Abstract**

A battery module according to an embodiment of the present disclosure includes: a battery cell stack in which a plurality of battery cells are stacked; a module frame for accommodating the battery cell stack; and a heat sink formed under the module frame to cool the plurality of battery cells, wherein the heat sink includes a lower plate, a flow path part which is a flowing path for a refrigerant, and a partition wall formed inside the flow path part along the direction in which the flow path part is formed, and wherein the lower plate is coupled to the bottom part of the module frame.

## Description

### [TECHNICAL FIELD]

### Cross Citation with Related Application(s)

This application claims the benefit of Korean Patent Application No. 10-2020-0043243 filed on April 9, 2020 with the Korean Intellectual Property Office, the disclosure of which is incorporated herein by reference in its entirety.

The present disclosure relates to a battery module and a battery pack including the same, and more particularly, to a battery module having improved cooling performance, and a battery pack including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series or in parallel.

Meanwhile, when a plurality of battery cells are connected in series/parallel to configure a battery pack, a method of configuring a battery module composed of battery cells and then adding other components to at least one battery module to configure a battery pack is common.

Such a battery module may include a battery cell stack in which a plurality of battery cells are stacked, a module frame for accommodating the battery cell stack, and a heat sink for cooling the plurality of battery cells.

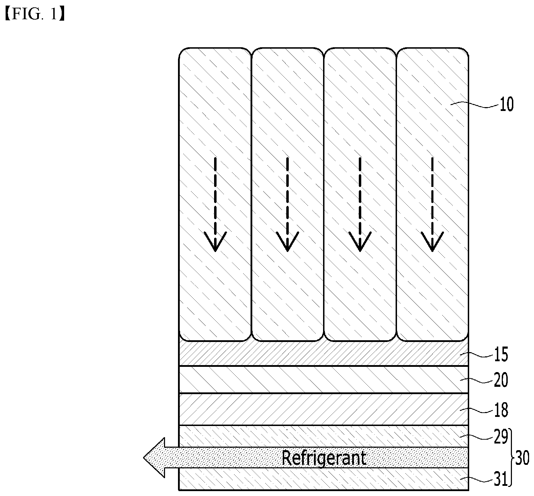

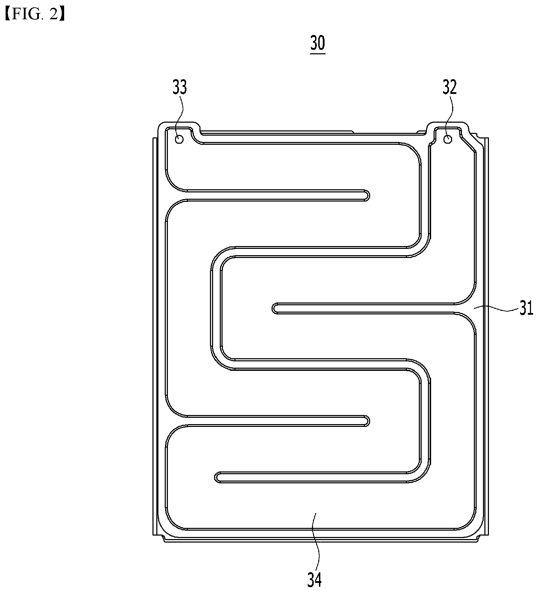

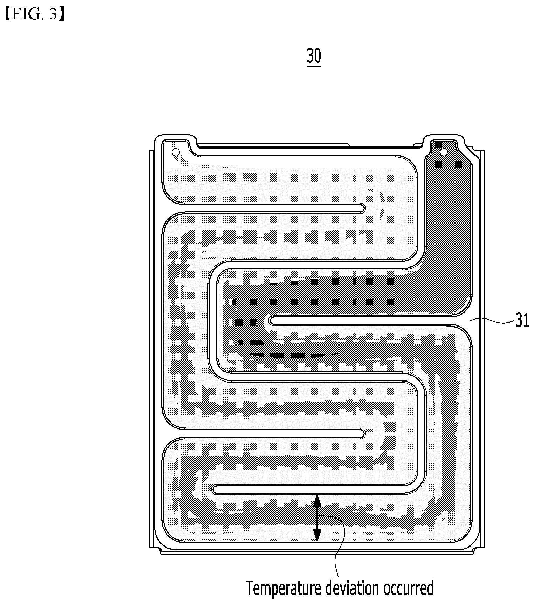

Fig. 1 is a diagram showing a battery module coupled to a heat sink according to the prior art. Fig. 2 is a plan view viewing a flow path structure of the heat sink of Fig. 1. Fig. 3 is a diagram showing a state in which the refrigerant flows in the flow path structure of Fig. 2.

Referring to Figs. 1 to 3, a conventional battery module includes a battery cell stack in which a plurality of battery cells 10 are stacked, a module frame for accommodating the battery cell stack, and a thermal conductive resin layer 15 located between a bottom part 20 of the module frame and the battery cell stack. Such a battery module can be formed under the bottom part 20 of the module frame and coupled with a heat sink 30 that provides a cooling function to the plurality of battery cells 10, thereby forming a battery pack. At this time, the heat sink 30 includes an inlet 32 through which the refrigerant flows in, an outlet 33 through which the refrigerant flows out, a lower plate 31 in which a cooling flow path 34 connecting the inlet 32 and the outlet 33 is formed, and an upper plate 29 covering the lower plate 31. Here, a thermal conductive layer 18 can be further formed between the bottom part 20 of the battery module and the heat sink 30.

Conventionally, in order to improve the cooling performance of the battery module and/or the battery pack, a separate cooling structure, for example, a heat sink, is required for each battery pack unit. Therefore, the cooling structure tended to be complicated. In addition, in order to minimize the pressure drop of the refrigerant flowing inside the heat sink, a structure in which the length of the flow path is reduced and the width is widened was adopted as shown in Fig. 2, but as shown in Fig. 3, when the width of the flow path 34 is widened, a temperature deviation may occur between the central portion and both side portions of the flow path width. When the temperature deviation occurs on the flow path, the cooling of the battery cell stack is not uniformly performed and thus, the overall cooling performance of the battery module may be deteriorated.

### [DETAILED DESCRIPTION OF THE INVENTION]

### [Technical Problem]

It is an object of the present disclosure to provide a battery module having improved cooling performance and a battery pack including the same.

The objects of the present disclosure are not limited to the aforementioned objects, and other objects which are not described herein should be clearly understood by those skilled in the art from the following detailed description.

### [Technical Solution]

In order to achieve the above object, according to one embodiment of the present disclosure, there is provided a battery module comprising: a battery cell stack in which a plurality of battery cells are stacked; a module frame for accommodating the battery cell stack; and a heat sink formed under the module frame to cool the plurality of battery cells, wherein the heat sink includes a lower plate, a flow path part which is a flowing path for a refrigerant, and a partition wall formed inside the flow path part along the direction in which the flow path part is formed, and wherein the lower plate is coupled to the bottom part of the module frame.

The partition wall may be coupled to the bottom part of the module frame.

The flow path part may have a structure formed by recessing downward from the lower plate, the upper side of the flow path part may be covered by the bottom part of the module frame, and the refrigerant may flow in a space between the flow path part and the bottom part of the module frame.

The heat sink may further include an inlet through which the refrigerant flows in, and an outlet through which the refrigerant flows out, and the start point of the partition wall may be formed so as to be spaced apart from the inlet.

The refrigerant flowing in through the inlet may flow from the start point of the partition wall by being divided into a first flow path part and a second flow path part.

The width of the first and second flow path parts may be consistently formed from the inlet to the outlet.

The partition wall may be formed so as to extend from the inlet to the outlet along a central portion of the flow path part.

The portion where the flow path part is bent may be formed of a curved surface.

The lower plate may be formed so as to correspond to the lower surface of the module frame.

According to another embodiment of the present disclosure, there can be provided a battery pack comprising the above-mentioned battery module.

### [ADVANTAGEOUS EFFECTS]

According to embodiments of the present disclosure, the sidewall structure can be formed without changing the flow path length to minimize the pressure drop due to the flow of the refrigerant and at the same time, reduce the temperature deviation between the flow path widths through the reduction of the flow path width through the side wall, thereby improving the cooling performance of the battery module.

In addition, the cooling structure can be simplified through the cooling structure in which the module frame and the heat sink are integrated.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a battery module coupled to a heat sink according to the prior art;
Fig. 2 is a plan view viewing a flow path structure of the heat sink of Fig. 1;
Fig. 3 is a diagram showing a state in which the refrigerant flows in the flow path structure of Fig. 2;
Fig. 4 is an exploded perspective view of the battery module according to an embodiment of the present disclosure;
Fig. 5 is a diagram showing a state in which the components of the battery module of Fig. 4 are assembled;
Fig. 6 is a view of the battery module assembled in Fig. 5 as viewed from the heat sink formed on the lower side part;
Fig. 7 is a cross-sectional view showing a heat sink in which the heat sink of Fig. 6 is cut taken in the horizontal direction and viewed in the A-A direction;
Fig. 8 is a diagram showing a state in which the refrigerant flows through the heat sink of Fig. 7;
Fig. 9 is a diagram showing a modified embodiment of the heat sink of Fig. 7;
Fig. 10 is a diagram showing a modified embodiment of the heat sink of Fig. 7; and
Fig. 11 is a diagram showing a modified embodiment of the heat sink of Fig. 7.

### [DETAILED DESCRIPTION OF THE EMBODIMENTS]

It should be appreciated that the exemplary embodiments, which will be described below, are illustratively described to assist in the understanding of the present disclosure, and the present disclosure can be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

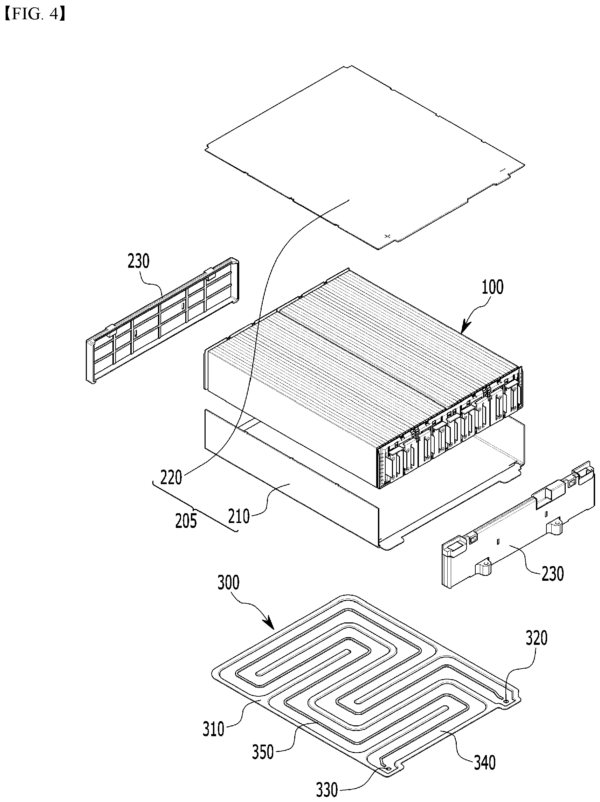

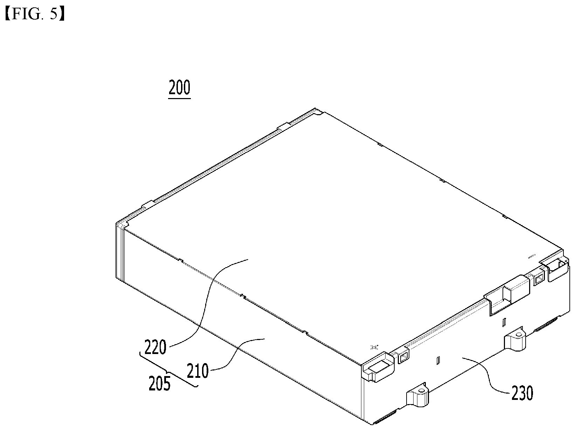

Below, the structure of the battery module according to an embodiment of the present disclosure will be described with reference to Figs. 4 and 5.

Fig. 4 is an exploded perspective view of the battery module according to an embodiment of the present disclosure. Fig. 5 is a diagram showing a state in which the components of the battery module of Fig. 4 are assembled.

Referring to Figs. 4 and 5, a battery module 200 according to an embodiment of the present disclosure includes a battery cell stack 100 in which a plurality of battery cells are stacked, a module frame 205 for accommodating the battery cell stack 100, and a heat sink 300 formed under the module frame 205 to cool the plurality of battery cells,

The battery cell according to the embodiments of the present disclosure is a secondary battery and may be configured into a pouch-type secondary battery. Such a battery cell may be composed of a plurality of cells, and the plurality of battery cells may be stacked together so as to be electrically connected to each other, thereby forming the battery cell stack 100. Each of the plurality of battery cells may include an electrode assembly, a cell case, and an electrode lead protruding from the electrode assembly.

The module frame 205 accommodates the battery cell stack 100. According to an embodiment of the present disclosure, the module frame 205 may include a lower frame 210 for covering the lower surface and both side surfaces of the battery cell stack 100, and an upper plate 220 for covering the upper surface of the battery cell stack 100. However, the structure of the module frame 205 is not limited thereto, and may be a mono frame shape surrounded by four surfaces except the front and rear surfaces of the battery cell stack 100.

The battery module 200 according to the embodiments of the present disclosure may further include end plates 230 for covering the front and rear surfaces of the battery cell stack 100. The battery cell stack 100 accommodated therein can be physically protected through the module frame 205 described above.

The heat sink 300 may be formed at the lower part of the module frame 205. The heat sink 300 may include a lower plate 310 forming a skeleton of the heat sink 300 and contacting with the bottom part of the module frame 205, an inlet 320 formed on one side of the heat sink 300 to supply a refrigerant from the outside to the inside the heat sink 300, an outlet 330 formed on one side of the heat sink so that the refrigerant flowing inside the heat sink flows to the outside of the heat sink, and a flow path part 340 that connects the inlet 320 and the outlet 330 and allows the refrigerant to flow.

According to the embodiments of the present disclosure, a partition wall 350 is formed inside the flow path part 340 along the direction in which the flow path part 340 is formed. The lower plate 310 and the partition wall 350 can be coupled to the bottom part of the module frame 205 by a method such as welding.

Specifically, the flow path part 340 may refer to a structure in which the lower plate 310 in contact with the lower surface of the lower frame 210 corresponding to the bottom part of the module frame 205 is formed to be depressed downward. The upper side of the flow path part 340 is opened, so that a flow path is formed between the flow path part 340 and the bottom part of the module frame 205, and a refrigerant can flow through the flow path. In other words, the battery module 200 according to the embodiments of the present disclosure can have a cooling integrated structure in which the bottom part of the module frame 205 serves to correspond to the upper plate of the heat sink 300.

Conventionally, a structure in which the refrigerant flows is separately formed on the lower side of the module frame, the module frame has no choice but to cool indirectly. Thus, the cooling efficiency is reduced, and a separate refrigerant flowing structure is formed, which causes a problem that the space utilization rate on a battery module and a battery pack on which the battery module is mounted is lowered. However, according to an embodiment of the present disclosure, by adopting a structure in which the heat sink 300 is integrated at the lower part of the module frame 205, the refrigerant can flow directly between the flow path part 340 and the bottom part of the module frame 205, thereby increasing the cooling efficiency due to direct cooling, and through a structure in which the heat sink 300 is integrated with the bottom part of the module frame 205, the space utilization rate on a battery module and a battery pack on which the battery module is mounted can be further improved.

Further, in the case of a large-area battery module in which as in the battery cell stack 100 according to embodiments of the present disclosure, the number of stacked battery cells is increased significantly compared to a conventional case, the width of the flow path can be formed wider and thus, a temperature deviation can be more severe.

The partition wall 350 according to the embodiments of the present disclosure reduces the width of the flow path part 340 without changing the flow path length of the flow path part 340 to minimize the pressure drop and, at the same time, reduce the temperature deviation between the flow path widths. The upper end of the partition wall 350 and the upper end of the lower plate 310 can be coupled to the lower surface of the module frame 205 by a method such as welding. Not only the pressure drop and temperature deviation of the flowing refrigerant can be minimized by the partition wall 350, but also in addition to the lower plate 210, the partition wall 350 can also be coupled with the bottom part of the module frame 205 to support the load of the module frame 205 and the battery cell stack 100 accommodated in the module frame 205 and reinforce the rigidity of the battery module 200.

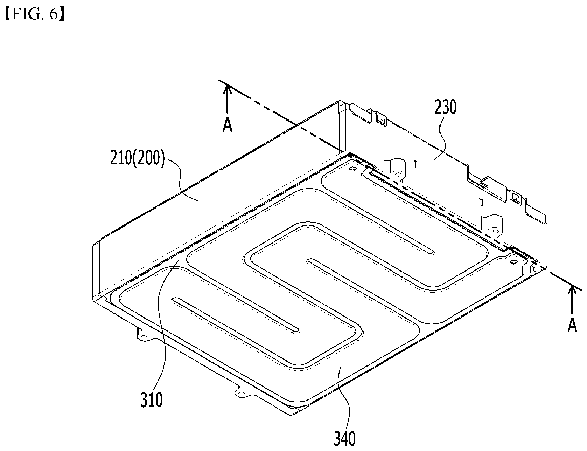

Below, the structure of the heat sink according to an embodiment of the present disclosure will be described in more detail with reference to Figs. 6 to 8.

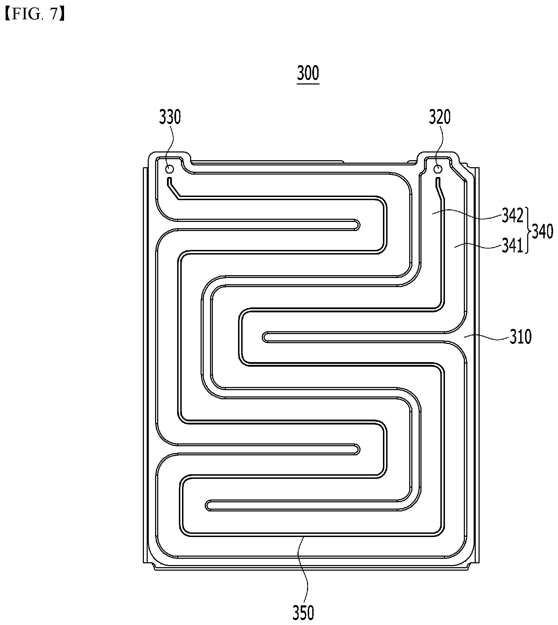

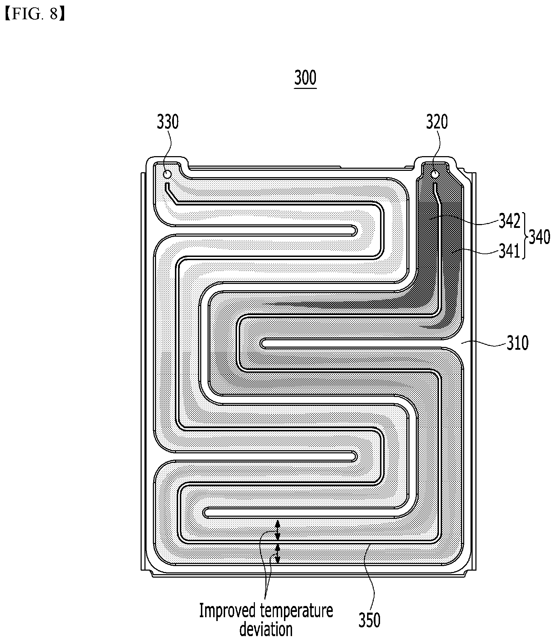

Fig. 6 is a view of the battery module assembled in Fig. 5 as viewed from the heat sink formed on the lower side part. Fig. 7 is a cross-sectional view showing a heat sink in which the heat sink of Fig. 6 is cut taken in the horizontal direction and viewed in the A-A direction. Fig. 8 is a diagram showing a state in which the refrigerant flows through the heat sink of Fig. 7.

Referring to Figs. 6 to 8, in the heat sink 300 according to an embodiment of the present disclosure, the lower plate 310 can be formed so as to correspond to the bottom part of the module frame 205. The bottom part of the module frame 205 corresponds to the bottom part of the lower frame 210, the lower plate 310 and the bottom part of the lower frame 210 can be coupled by welding, and the rigidity of the entire battery module can be reinforced through the lower plate 310. The lower plate 310 and the bottom part of the lower frame 210 are sealed through weld-coupling, whereby a refrigerant can flow without leakage in the flow path part 340 formed inside the lower plate 310.

Both the inlet 320 and the outlet 330 can be formed on one side of the heat sink 300. More specifically, both the inlet 320 and the outlet 330 may be formed on one side of the heat sink 300 that is formed at a portion at which the end plate 230 is located. The inlet 320 and the outlet 330 may be respectively located at both ends of one side of the heat sink 300. A refrigerant supply part and a refrigerant discharge part are formed on a lower side or an upper side of the heat sink 300, so that the refrigerant supplied through the refrigerant supply part can flow into the inlet 320, and the refrigerant flowing out through the outlet 330 can be discharged to the outside through the refrigerant discharge part.

The flow path part 340 may be formed so as to cover the bottom part of the module frame 205 while being bent. The flow path part 340 is formed in most of areas of the bottom part of the module frame 205 excluding a portion in which the lower plate 310 makes contact with the bottom part of the module frame 205, whereby all the portions of the battery cell stack 100, which are arranged so as to occupy most of areas of the bottom part of the module frame 205 at the upper side of the module frame 205, can be uniformly cooled.

The portion at which the flow path part 340 is bent may be formed of a curved surface. Thereby, the portion at which the partition wall 350 is bent may also be formed of a curved surface. When angled edge portions are formed in the flow path part 340, it is likely that a flow of the refrigerant will stagnate at the angled edge portions, thus increasing a temperature deviation and a pressure drop. In this regard, if the bending part is treated with curved surfaces as in the embodiment of the present disclosure, the flowing of the refrigerant can be made naturally.

The partition wall 350 can be formed so as to extend from the inlet 320 to the outlet 330 along a central portion of the flow path part 340. Through this, the refrigerant flowing into the inlet 320 can be guided up to the outlet 330 along the partition wall 350.

The start point of the partition wall 350 is formed so as to be spaced apart from the inlet 320, and the refrigerant flowing in through the inlet 320 can flow from the start point of the partition wall 350 by being divided into the first flow path part 341 and the second flow path part 342 that are formed through the partition wall 350. In this case, the widths of the first flow path part 341 and the second flow path part 342 are formed to be the same, and the widths of the first flow path part 341 and the second flow path part 342 can be consistently formed from the inlet 320 to the outlet 340. Therefore, the flow may not be biased toward any one side of the first and second flow passages 341 and 342, and it is possible to minimize a difference in temperature deviation between flow path parts that may occur by widening the width of any one of the first and second flow path parts 341 and 342. In addition, the widths of the flow path parts 340 are formed constantly and thus, it is possible to minimize the possibility of pressure drop and temperature deviation that may occur when the width is widened or narrowed.

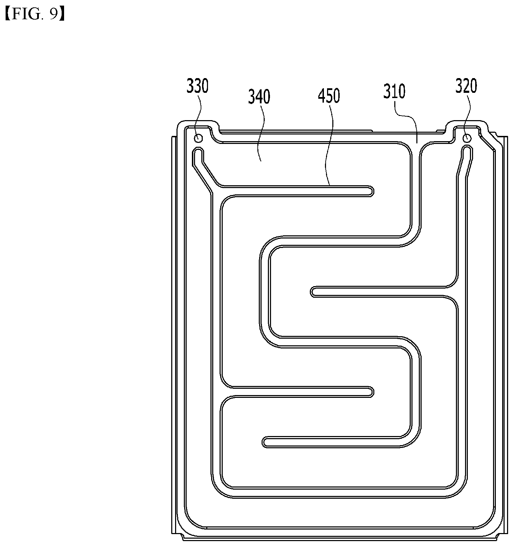

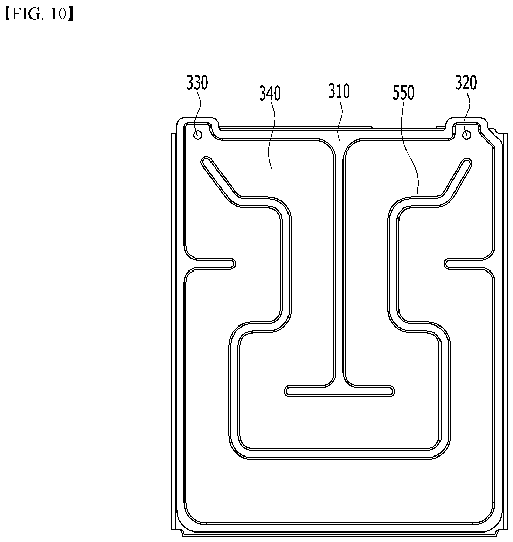

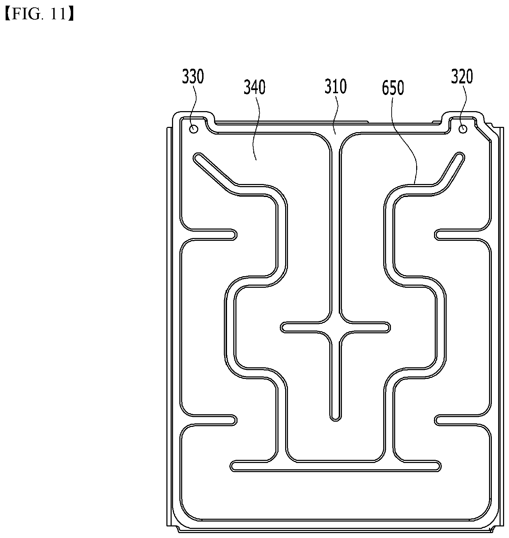

Figs. 9 to 11 are diagrams showing a modified embodiment of the heat sink of Fig. 7. Referring to Figs. 9 to 11, according to the embodiments, the partition wall 350 shown in Fig. 7 can implement a heat sink having side wall structures 450, 550 and 650 modified in various shapes.

The above-mentioned battery module can be included in the battery pack. The battery pack can have a structure in which one or more of the battery modules according to the embodiment of the present disclosure are gathered, and packed together with a battery management system (BMS) and a cooling device that control and manage battery's temperature, voltage, etc.

The battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also belongs to the scope of the present disclosure.

Although preferred embodiments of the present disclosure have been shown and described above, the scope of the present disclosure is not limited thereto, and numerous other modifications and embodiments can be devised by those skilled in the art that will fall within the spirit and scope of the principles of the invention described in the appended claims. Further, these modified embodiments should not be understood individually from the technical spirit or perspective of the present disclosure.

### [Description of Reference Numerals]

205: module frame
210: lower frame
220: upper plate
300: heat sink
310: lower plate
320: inlet
330: outlet
340: flow path part
341: first flow path
342: second flow path
350: partition wall

## Claims

1. A battery module comprising:
a battery cell stack in which a plurality of battery cells are stacked;
a module frame for accommodating the battery cell stack; and
a heat sink formed under the module frame to cool the plurality of battery cells,
wherein the heat sink comprises a lower plate, a flow path part which is a flowing path for a refrigerant, and a partition wall formed inside the flow path part along a direction in which the flow path part is formed, and
wherein the lower plate is coupled to the bottom part of the module frame.

2. The battery module of claim 1, wherein:
the partition wall is coupled to the bottom part of the module frame.

3. The battery module of claim 1, wherein:
the flow path part has a structure formed by recessing downward from the lower plate, the upper side of the flow path part is covered by the bottom part of the module frame, and the refrigerant flows in a space between the flow path part and the bottom part of the module frame.

4. The battery module of claim 1, wherein:
the heat sink further comprises an inlet through which the refrigerant flows in, and an outlet through which the refrigerant flows out, and
the start point of the partition wall is formed so as to be spaced apart from the inlet.

5. The battery module of claim 4, wherein:
the refrigerant flowing in through the inlet flows from the start point of the partition wall by being divided into a first flow path part and a second flow path part.

6. The battery module of claim 5, wherein:
a width of the first and second flow path parts is consistently formed from the inlet to the outlet.

7. The battery module of claim 5, wherein:
the partition wall is formed so as to extend from the inlet to the outlet along a central portion of the flow path part.

8. The battery module of claim 7, wherein:
a portion where the flow path part is bent is formed of a curved surface.

9. The battery module of claim 1, wherein:
the lower plate is formed so as to correspond to the lower surface of the module frame.

10. A battery pack comprising the battery module of claim 1
